# FASCICULE DE BREVET EUROPEEN

(11) **EP 3 707 357 B1**
(45) Date de publication et mention de la délivrance du brevet: **18.08.2021**
(21) Numéro de dépôt: 18845468.0
(22) Date de dépôt: 20.12.2018
(51) Int. Cl.: F01P 5/06, F28D 1/02

(54) **DISPOSITIF DE VENTILATION À DEUX RANGÉES DE TUBES MOBILES POUR MODULE D'ÉCHANGE DE CHALEUR DE VÉHICULE AUTOMOBILE**
BELÜFTUNGSVORRICHTUNG MIT ZWEI REIHEN VON BEWEGLICHEN ROHREN FÜR EIN WÄRMETAUSCHERMODUL EINES KRAFTFAHRZEUGS
VENTILATION DEVICE HAVING TWO ROWS OF MOVABLE TUBES FOR A MOTOR VEHICLE HEAT EXCHANGE MODULE

(30) Priorité: 20.12.2017 FR 1762625
(43) Date de publication de la demande: 16.09.2020
(73) Titulaire: Valeo Systemes Thermiques-THS, 78322 Le Mesnil Saint Denis Cedex (FR)
(72) Inventeur: LISSNER, Michael, 78322 LE MESNIL SAINT DENIS CEDEX (FR); AZZOUZ, Kamel, 78322 LE MESNIL SAINT DENIS CEDEX (FR); MAMMERI, Amrid, 78322 LE MESNIL SAINT DENIS CEDEX (FR)
(74) Mandataire: Neuviale, Bertrand
(86) Numéro de dépôt international: PCT/FR2018/053485
(87) Numéro de publication internationale: WO 2019/122766

(56) Documents cités:
- JP-A- 2014 015 862
- JP-A- 2014 020 245
- JP-A- 2015 001 155
- JP-A- 2015 124 748

## Description

La présente invention concerne un module d'échange de chaleur de véhicule automobile. En particulier, la présente demande se rapporte à un dispositif de ventilation tel que défini au préambule de la revendication 1, et tel qu'illustré en figure 1 du document JP 2015-124748.

Un échangeur de chaleur de véhicule automobile comprend généralement des tubes, dans lesquels un fluide caloporteur est destiné à circuler, et des éléments d'échange de chaleur reliés à ces tubes, souvent désignés par le terme « ailettes » ou « intercalaires ».

Les ailettes permettent d'augmenter la surface d'échange entre les tubes et l'air ambiant. Toutefois, afin d'augmenter l'échange de chaleur entre le fluide caloporteur et l'air ambiant, il est fréquent qu'un dispositif de ventilation soit utilisé en sus pour générer un flux d'air dirigé vers les tubes et les ailettes.

Un tel dispositif de ventilation comprend le plus souvent un ventilateur à hélice, ce qui présente de nombreux inconvénients.

En premier lieu, l'ensemble formé par le ventilateur à hélice et son système de motorisation occupe un volume important.

De plus, la distribution de l'air ventilé par l'hélice, souvent placée au centre de la rangée de tubes caloporteurs, n'est pas homogène sur l'ensemble de la surface de l'échangeur de chaleur. En particulier, certaines régions de l'échangeur de chaleur, comme les extrémités des tubes caloporteurs et les coins de l'échangeur de chaleur, ne sont pas ou peu atteintes par le flux d'air ventilé par l'hélice.

Enfin, lorsque la mise en marche du dispositif de ventilation ne s'avère pas nécessaire, notamment lorsque le flux d'air ambiant créé par le mouvement du véhicule automobile suffit à refroidir le fluide caloporteur, les pales de l'hélice masquent en partie l'échangeur de chaleur. Ainsi, une partie de l'échangeur de chaleur n'est pas ou peu ventilé par le flux d'air ambiant dans ce cas, ce qui limite l'échange de chaleur entre l'échangeur de chaleur et le flux d'air ambiant.

Par ailleurs, il est connu du brevet allemand DE 10 2011 120 865 un véhicule automobile présentant un dispositif de ventilation et un échangeur de chaleur, le dispositif de ventilation étant adapté à générer un flux d'air à travers l'échangeur de chaleur. Le dispositif de ventilation est adapté à créer un flux d'air secondaire à partir d'un flux primaire émis depuis un ou plusieurs éléments annulaires, le flux d'air secondaire étant beaucoup plus fort que le flux d'air primaire. Selon ce brevet, le dispositif de ventilation fait partie d'une grille de refroidissement, disposée en face avant du véhicule automobile.

Dans un tel véhicule automobile, chaque élément annulaire est alimenté en flux d'air primaire par un unique ventilateur, disposé à l'extérieur de l'élément annulaire, via un conduit débouchant ponctuellement dans l'élément annulaire. Par conséquent, le flux d'air éjecté émis par l'élément annulaire n'est pas homogène sur le contour de l'élément annulaire. Au contraire, le flux d'air émis est d'autant plus important qu'il est proche du ventilateur. Il s'en suit la création d'un flux d'air secondaire traversant l'échangeur de chaleur qui est inhomogène également.

Enfin, il est connu de la demande DE 10 2015 205 415 un dispositif de ventilation destiné à générer un flux d'air à travers un échangeur de chaleur comprenant un cadre creux et au moins une entretoise creuse, divisant la surface délimitée par le cadre en cellules. Le cadre et la ou les entretoises sont en communication de fluide avec une turbomachine d'alimentation en un flux d'air. La turbomachine est disposée à l'extérieur du cadre. Le cadre et éventuellement la ou les entretoises sont en outre munis d'une ouverture d'éjection du flux d'air les parcourant.

Là encore, le dispositif de ventilation ne permet pas de générer un flux d'air homogène à travers l'échangeur de chaleur. Au contraire, le flux d'air émis par le dispositif est d'autant plus important qu'il est éjecté du dispositif de ventilation à proximité de la turbomachine.

L'invention vise à proposer un dispositif de ventilation perfectionné ne présentant pas au moins certains des inconvénients susmentionnés.

À cet effet, l'invention propos un dispositif de ventilation destiné à générer un flux d'air à travers au moins un échangeur de chaleur de véhicule automobile, le dispositif de ventilation comprenant :
- une première pluralité de conduits,
- au moins un premier collecteur d'air comportant des orifices, chaque conduit de la première pluralité de conduits débouchant par une de ses extrémités dans un orifice distinct du au moins une premier collecteur d'air, chaque conduit de ladite première pluralité de conduits ayant au moins une ouverture de passage d'un flux d'air traversant ledit conduit, l'ouverture étant distincte des extrémités du conduit correspondant, l'ouverture étant située à l'extérieur dudit au moins un premier collecteur d'air,
- une deuxième pluralité de conduits,
- au moins un deuxième collecteur d'air comportant des orifices, chaque conduit de la deuxième pluralité de conduits débouchant par une de ses extrémités dans un orifice distinct du au moins une deuxième collecteur d'air, chaque conduit de ladite deuxième pluralité de conduits ayant au moins une ouverture de passage d'un flux d'air traversant ledit conduit, l'ouverture étant distincte des extrémités du conduit correspondant, l'ouverture étant située à l'extérieur dudit au moins un deuxième collecteur d'air,
dans lequel les conduits de la première pluralité de conduits et/ou de la deuxième pluralité de conduits sont pivotables autour d'un axe longitudinal respectif, indépendamment de ladite deuxième pluralité de conduits ou de la première pluralité de conduits, respectivement.

Ainsi, de manière avantageuse, le dispositif de ventilation selon l'invention permet de contrôler le flux d'air éjecter en direction d'une première zone d'un échangeur de chaleur, indépendamment du flux d'air éjecter ou non en direction d'une deuxième zone de l'échangeur de chaleur, distincte de la première zone. Ceci peut notamment permettre d'adapter le flux d'air éjecté par le dispositif de ventilation aux besoins réels de refroidissement de l'échangeur de chaleur, afin de limiter les pertes de charges induites par l'utilisation du dispositif de ventilation aux seules pertes de charges effectivement utiles et nécessaires.

De préférence, le dispositif de ventilation comprend une ou plusieurs des caractéristiques suivantes, prises seules ou en combinaison :
- les conduits de la première pluralité de conduits et les conduits de la deuxième pluralité de conduits forment respectivement une première et une deuxième rangées de conduits, les première et deuxième rangées de conduits s'étendant dans un même plan,
- les conduits de la première pluralité de conduits et/ou les conduits de la deuxième pluralité de conduits ont une section transversale oblongue, telle que dans une première position des conduits, un espace est ménagés entres les conduits, et dans une deuxième position des conduits, atteinte à partir de la première position par pivotement autour d'un axe longitudinal, les conduits réduisent l'espace entre les conduits, voire empêchent le passage d'air entre les conduits,
- le dispositif de ventilation comprend des moyens pour sélectivement couper la communication de fluide entre une première source de flux d'air alimentant ledit au moins un premier collecteur et au moins certains conduits de la première pluralité de conduits et/ou des moyens pour sélectivement couper la communication de fluide entre une deuxième source de flux d'air alimentant ledit au moins un deuxième collecteur et au moins certains conduits de la deuxième pluralité de conduits,
- le dispositif de ventilation comprend au moins un premier dispositif de propulsion d'air en communication de fluide avec ledit au moins un premier collecteur d'air et au moins un deuxième dispositif de propulsion d'air en communication de fluide avec ledit au moins un deuxième collecteur d'air,
- le dispositif de ventilation comprend au moins un premier dispositif de propulsion d'air reçu dans ledit au moins un premier collecteur d'air et au moins un deuxième dispositif de propulsion d'air reçu dans ledit au moins un deuxième collecteur d'air,
- dans lequel chaque conduit de ladite première pluralité de conduits et/ou de la deuxième pluralité de conduits a, sur au moins un tronçon, une section géométrique comprenant :
   - un bord d'attaque ;
   - un bord de fuite opposé au bord d'attaque ;
   - un premier et un deuxième profils, s'étendant chacun entre le bord d'attaque et le bord de fuite,
   - ladite au moins une ouverture du conduit étant sur le premier profil, ladite au moins une ouverture étant configurée de sorte que le flux d'air éjecté s'écoule le long d'au moins une partie du premier profil,
   - dans lequel chaque conduit de ladite première pluralité de conduits et/ou de ladite deuxième pluralité de conduits a, sur au moins un tronçon, une section géométrique comprenant :
   - un bord d'attaque ;
   - un bord de fuite opposé au bord d'attaque ;
   - un premier et un deuxième profils s'étendant chacun entre le bord d'attaque et le bord de fuite,
   - au moins une ouverture du conduit étant configurée sur le premier profil de sorte que le flux d'air éjecté s'écoule le long d'au moins une partie du premier profil et au moins une ouverture du conduit étant configurée sur le deuxième profil de sorte que le flux d'air éjecté s'écoule le long d'au moins une partie du deuxième profil,
   - les conduits sont des tubes sensiblement rectilignes, alignés de manière à former deux rangées de tubes ;
   - l'ouverture est une fente dans une paroi externe du conduit, la fente s'étendant selon une direction d'allongement du conduit, de préférence sur au moins 90 % de la longueur conduit et/ou la hauteur de ladite au moins une ouverture est supérieure ou égale à 0,5 mm, de préférence supérieure ou égale à 0,7 mm, et/ou inférieure ou égale à 2 mm, de préférence inférieure ou égale à 1,5 mm ;
   - chaque conduit a, sur au moins un tronçon, une section géométrique comprenant :
      - un bord d'attaque ;
      - un bord de fuite opposé au bord d'attaque ;
      - un premier et un deuxième profils, s'étendant chacun entre le bord d'attaque et le bord de fuite,
      ladite au moins une ouverture du conduit étant sur le premier profil, ladite au moins une ouverture étant configurée de sorte que le flux d'air éjecté s'écoule le long d'au moins une partie du premier profil,
   - ladite au moins une ouverture du premier profil étant délimitée par une lèvre externe et une lèvre interne, une extrémité de la lèvre interne se prolonge, en direction du deuxième profil, au-delà d'un plan normal à l'extrémité libre de la lèvre externe, la section de passage étant alors définie comme la portion de la section du tube disposée entre ladite extrémité de la lèvre interne et le bord de fuite, d'une part, et entre les premier et deuxième profils, d'autre part ;
   - la distance maximale entre le premier et le deuxième profils, selon une direction d'alignement des conduits, est en aval de ladite au moins une ouverture, dans le sens d'écoulement dudit flux d'air éjecté par ladite au moins une ouverture, la distance maximale étant de préférence supérieure ou égale à 5 mm, de préférence supérieure ou égale à 10 mm, et/ou inférieure ou égale à 20 mm, de préférence inférieur ou égale à 15 mm, la distance maximale étant de manière encore plus préférée égale à 11,5 mm ;
   - le premier profil comporte une partie bombée dont le sommet définit le point du premier profil correspondant à la distance maximale, la partie bombée étant disposée en aval de l'ouverture dans le sens d'écoulement dudit flux d'air éjecté par ladite au moins une ouverture ;
   - le premier profil comporte une première partie sensiblement rectiligne, de préférence en aval de la partie bombée dans le sens d'écoulement dudit flux d'air éjecté par la au moins une ouverture, dans lequel le deuxième profil comporte une partie sensiblement rectiligne, s'étendant de préférence sur une majorité de la longueur du deuxième profil, la première partie rectiligne du premier profil et la partie rectiligne du deuxième profil formant un angle non plat, l'angle étant de préférence supérieur ou égal à 5°, et/ou inférieur ou égal 20°, de préférence encore sensiblement égal à 10° ;
   - la première partie rectiligne s'étend sur un tronçon du premier profil correspondant à une longueur, mesurée selon une direction perpendiculaire à la direction d'alignement des conduits et à une direction longitudinale des conduits, supérieure ou égale à 30 mm, de préférence supérieure ou égale à 40 mm, et/ou inférieure ou égale à 50 mm ;
   - le premier profil comporte une deuxième partie rectiligne, en aval de la première partie rectiligne dans le sens d'écoulement du flux d'air éjecté par la au moins une ouverture, la deuxième partie rectiligne s'étendant sensiblement parallèlement à la partie rectiligne du deuxième profil, le premier profil comportant de préférence une troisième partie rectiligne, en aval de la deuxième partie rectiligne du premier profil, la troisième partie rectiligne formant un angle non plat avec la partie rectiligne du deuxième profil, la troisième partie rectiligne s'étendant sensiblement jusqu'à un bord arrondi reliant la troisième partie rectiligne du premier profil et la partie rectiligne du deuxième profil, le bord arrondi définissant le bord de fuite du profil du conduit ;
   - la distance entre la deuxième partie rectiligne du premier profil et la partie rectiligne du deuxième profil est supérieure ou égale à 2 mm et/ou inférieure ou égale à 10 mm, de préférence inférieure ou égale à 5 mm ;
   - ladite section géométrique du conduit a une longueur, mesurée selon une direction perpendiculaire à la direction d'alignement des conduits et à une direction principale d'extension des conduits, supérieure ou égale à 50 mm et/ou inférieure ou égale à 70 mm, de préférence sensiblement égale à 60 mm ;
   - le dispositif de ventilation comprend au moins un premier et un deuxième conduits, le premier profil du premier conduit étant en vis-à-vis du premier profil du deuxième conduit ;
   - le dispositif de ventilation comprend en outre un troisième conduit, tel que le deuxième profil du deuxième conduit soit en vis-à-vis du deuxième profil du troisième conduit, la distance entre le centre de la section géométrique du deuxième conduit et le centre de la section géométrique du troisième conduit étant de préférence inférieure à la distance entre le centre de la section géométrique du premier conduit et le centre de la section géométrique du deuxième conduit ; et
   - chaque conduit est symétrique par rapport au plan contenant le bord d'attaque et le bord de fuite, de sorte que chaque conduit comporte deux ouvertures symétriques, respectivement sur le premier profil et sur le deuxième profil.

L'invention concerne également un module d'échange de chaleur de véhicule automobile comprenant :
- au moins un échangeur de chaleur, ledit au moins un échangeur de chaleur ayant plusieurs tubes, dits tubes caloporteurs, dans lesquels un fluide est destiné à circuler, et
- un dispositif de ventilation tel que décrit précédemment, adapté à générer un flux d'air vers les tubes caloporteurs.

Avantageusement, le module d'échange de chaleur comprend au moins un premier échangeur de chaleur et au moins un deuxième échangeur de chaleur, ledit au moins un premier échangeur de chaleur étant disposé en vis-à-vis de ladite première pluralité de conduits et ledit au moins un deuxième échangeur de chaleur étant disposé en vis-à-vis de ladite deuxième pluralité de conduits.

L'invention sera mieux comprise à la lecture de la description qui va suivre donnée uniquement à titre d'exemple et faite en se référant aux dessins dans lesquels :
- la figure 1 est une vue en perspective d'un exemple de module d'échange de chaleur avec un échangeur de chaleur muni d'une partie d'un dispositif de ventilation ;
- la figure 2 est une vue schématique en coupe selon le plan II-II d'un tube aérodynamique du dispositif de ventilation de la figure 1 ;
- les figures 3 à 5 illustrent schématiquement en coupe un exemple de variante des tubes du dispositif de ventilation illustré aux figures 1 et 2 ;
- les figures 6 à 8 illustrent schématiquement en coupe transversales d'autres exemples de géométrie possibles des tubes du dispositif de ventilation de la figure 1 ; et
- les figures 9 et 10 illustrent respectivement un dispositif de ventilation et un échangeur de chaleur d'une variante du module d'échange de chaleur de la figure 1.

Sur les différentes figures, les éléments identiques ou similaires, ayant une fonction identique ou analogue, portent les mêmes références. La description de leur structure et de leur fonction n'est donc pas systématiquement reprise.

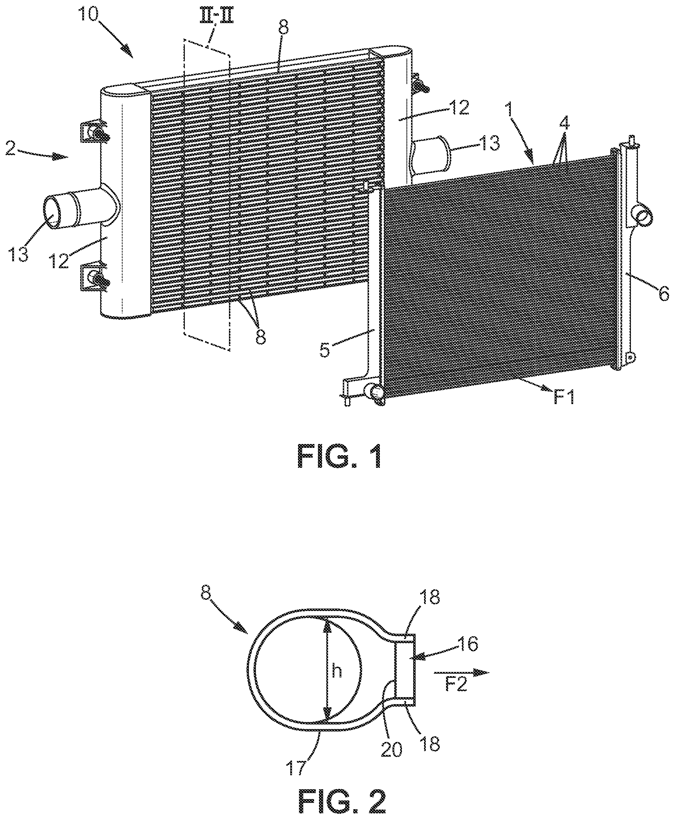

On a représenté à la figure 1 un exemple de module d'échange de chaleur 10 avec un échangeur de chaleur 1 destiné à équiper un véhicule automobile, équipé d'un dispositif de ventilation 2 selon un premier exemple de réalisation.

L'échangeur de chaleur 1 comprend des conduits caloporteurs 4 dans lesquels un fluide est destiné à circuler, ici de l'eau ou du liquide de refroidissement. Les conduits caloporteurs 4 sont ici sensiblement rectilignes et s'étendent selon une direction longitudinale. Les conduits caloporteurs forment ainsi des tubes caloporteurs 4. Les tubes caloporteurs 4 sont parallèles entre eux et alignés de manière à former une rangée. Les tubes caloporteurs 4 sont sensiblement tous de la même longueur.

Les conduits caloporteurs 4 s'étendent chacun entre un collecteur d'admission de fluide 5 et un collecteur d'évacuation de fluide 6, communs à tous les conduits caloporteurs 4. De préférence, les orifices du collecteur d'admission de fluide 5, dans lesquels débouchent les conduits caloporteurs 4 sont tous compris dans un même premier plan. De même, les orifices du collecteur d'évacuation de fluide 6, dans lesquels débouchent les conduits caloporteurs 4 sont tous compris dans un même deuxième plan, de préférence parallèle audit premier plan.

Plus particulièrement, et de façon classique dans les échangeurs de chaleur de véhicule automobile, chaque tube caloporteur 4 a une section sensiblement oblongue, et est délimité par des première et seconde parois planes qui sont reliées à des ailettes d'échange de chaleur. Pour des raisons de clarté, les ailettes ne sont pas représentées sur la figure 1.

Le module d'échange de chaleur 10 est équipé d'un dispositif de ventilation 2 comprenant une pluralité de conduits de ventilation 8. Les conduits de ventilation 8, de la même façon que les conduits caloporteurs 4, sont sensiblement rectilignes, de manière à former des tubes de ventilation 8. Les tubes de ventilation 8 sont en outre parallèles entre eux et alignés de manière à former une rangée de tubes de ventilation 8. Les tubes de ventilation 8 sont également de la même longueur. La longueur des tubes de ventilation 8 est par exemple sensiblement égale à la longueur des tubes caloporteurs 4.

Le dispositif de ventilation 2 est destiné à générer un flux d'air en direction des tubes caloporteurs 4.

Les tubes caloporteurs 4 et les tubes de ventilation 8 peuvent être tous parallèles entre eux, comme cela est illustré à la figure 1. Ainsi, les rangées de tubes de ventilation 8 et de tubes caloporteurs 4 sont elles-mêmes parallèles. En outre, les tubes de ventilation 8 peuvent être disposés de sorte que chacun d'entre eux se trouve en vis-à-vis d'un tube caloporteur 4.

Le nombre de tubes de ventilation 8 est adapté au nombre de tubes caloporteurs 4. Par exemple, pour un échangeur de chaleur 1 classique, le dispositif de ventilation 2 peut comprendre par exemple au moins dix tubes de ventilation 8, de préférence au moins quinze tubes de ventilation 8, de préférence encore au moins vingt-quatre tubes de ventilation 8 et/ou au plus cinquante tubes de ventilation 8, de préférence au plus trente-six tubes de ventilation 8, de préférence encore au plus trente tubes de ventilation 8. L'échangeur de chaleur 1 peut par exemple comporter entre soixante et soixante-dix tubes caloporteurs 4.

Les tubes et le nombre de tubes de ventilation 8 du dispositif de ventilation 2 peuvent être tels qu'une section de passage d'air minimale entre les tubes du dispositif de ventilation, définie dans un plan sensiblement perpendiculaire au flux d'air à travers l'échangeur de chaleur 1, est comprise entre 25 et 50 % de la surface, définie dans un plan perpendiculaire au flux d'air à travers l'échangeur de chaleur, entre deux tubes caloporteurs extrémaux.

De préférence, la surface frontale des tubes de ventilation 8, mesurée dans un plan sensiblement perpendiculaire au flux d'air traversant l'échangeur de chaleur 1, est inférieure à 85% de la surface frontale occupée par les tubes caloporteurs 4.

Par ailleurs, afin de limiter le volume occupé par le module d'échange de chaleur comprenant l'échangeur de chaleur 1 et le dispositif de ventilation 2, tout en obtenant des performances d'échange de chaleur similaires à celle d'un dispositif de ventilation à hélice, on peut disposer la rangée de tubes de ventilation 8 à une distance inférieure ou égale à 150 mm de la rangée de tubes caloporteurs 4, de préférence inférieure ou égale à 100 mm. Cette distance est de préférence supérieure ou égale à 5 mm, de préférence supérieure à 40 mm. En effet, une distance trop courte entre les tubes de ventilation 8 et les tubes caloporteurs 4 risque de ne pas permettre un mélange homogène du flux d'air éjecté des tubes de ventilation 8 avec le flux d'air induit. Un mélange inhomogène ne permet pas de refroidir de manière homogène les tubes caloporteurs 4 et induit des pertes de charges élevées. Une distance trop grande risque de ne pas permettre de mettre en place l'ensemble formé par le dispositif de ventilation et le dispositif d'échange de chaleur dans un véhicule automobile, sans nécessiter une conception adaptée du bloc moto-propulseur et/ou des autres organes du véhicule automobile présents au voisinage du module d'échange de chaleur.

De même, toujours pour limiter le volume occupé par le module d'échange de chaleur, on peut s'assurer que la hauteur de la rangée de tubes de ventilation 8 (le terme hauteur se rapportant ici à la dimension correspondant à la direction selon laquelle les tubes de ventilation 8 sont alignés) est sensiblement égale ou inférieure à celle de la hauteur de la rangée de tubes caloporteurs 4. Par exemple, la hauteur de la rangée de tubes caloporteurs 4 étant de 431 mm, on peut s'assurer que la hauteur de la rangée de tubes de ventilation 8 est sensiblement égale ou inférieure à cette valeur.

Le dispositif de ventilation 2 comprend en outre un dispositif d'alimentation alimentant en air les tubes de ventilation 8, non visible sur la figure 1, via un collecteur d'admissions d'air 12, de préférence via deux collecteurs d'admission d'air 12.

Les moyens de propulsion d'air alimentant en air le dispositif de ventilation 2 sont par exemple une turbomachine, alimentant les deux collecteurs d'admission d'air 12, disposés à chacune des extrémités du dispositif de ventilation 1, via un port respectif 13. Sur l'exemple illustré à la figure 1, les ports 13 sont sensiblement au milieu des collecteurs d'admission d'air 12. Alternativement ou au surplus, les ports 13 sont à une extrémité longitudinale 12a, 12b de chaque collecteur d'admission d'air 12. Alternativement, une turbomachine peut alimenter un seul collecteur d'admission 12 et non deux. Également, une ou plusieurs turbomachines peuvent être mises en œuvre pour alimenter chaque collecteur d'admission d'air 12 ou tous les collecteurs d'admission d'air 12.

Selon un autre mode de réalisation, également, la ou les turbomachines sont reçues dans un ou dans chaque collecteur d'admission d'air 12.

Ici, cependant, les moyens de propulsion d'air sont déportés à distance des tubes de ventilation 8 par l'intermédiaire des collecteurs d'admission d'air 12. La ou chaque turbomachine peut ne pas être directement adjacente aux collecteurs d'admission d'air 12.

Chaque collecteur d'admission d'air 12 peut par exemple être tubulaire. Dans l'exemple de réalisation de la figure 1, les collecteurs d'admission d'air 12 s'étendent selon une même direction, qui est ici perpendiculaire à la direction d'allongement (ou direction longitudinale) des tubes caloporteurs 4 et de ventilation 8.

Comme on peut le voir sur la figure 1, le collecteur d'admission d'air 12 comprend une pluralité d'orifices d'éjection d'air réalisés chacun à une extrémité d'une portion tubulaire respective, chaque orifice d'éjection d'air étant relié à un unique tube de ventilation 8, et plus particulièrement à l'extrémité du tube de ventilation 8.

Chaque tube de ventilation 8 a, selon l'exemple des figures 1 et 2, une pluralité d'ouvertures 16 de passage d'un flux d'air F2 traversant le tube 8. Les ouvertures 16 des tubes de ventilation 8 sont situées à l'extérieure des collecteurs d'air 12. Plus précisément, ici, les ouvertures 16 sont orientées sensiblement en direction de l'échangeur de chaleur 1, et plus précisément encore, sensiblement en direction des tubes caloporteurs 4, les fentes 16 étant par exemple disposées en vis-à-vis des tubes caloporteurs 4 ou des ailettes logées entre les tubes caloporteurs.

Chaque tube de ventilation 8 débouche dans un orifice 14 distinct de chaque collecteur 12. Ainsi, chaque collecteur d'air 12 a autant d'orifices 14 qu'il ne reçoit de tubes de ventilation 8, un tube de ventilation 8 étant reçu dans chacun des orifices 14 du collecteur d'air 12. Ceci permet une distribution plus homogène du flux d'air traversant chaque collecteur d'air 12, dans les différents tubes de ventilation 8.

En l'espèce, chaque collecteur d'air 12 a une forme creuse, par exemple une forme sensiblement cylindrique, plus particulièrement encore sensiblement cylindrique d'axe rectiligne. Outre les orifices 14 dans lesquels débouchent les tubes de ventilation 8, par leurs extrémités, chaque collecteur d'air 12 présente encore une ou plusieurs bouches 13 destinées à être en communication de fluide avec une turbomachine (non représentée sur les figures) pour créer un flux d'air dans chaque collecteur 12. Chaque collecteur 12 permet alors de distribuer ce flux d'air dans les différents tubes de ventilation 8. Selon différentes variantes, chaque collecteur d'air 12 peut être en communication de fluide avec une ou plusieurs turbomachines propres (c'est-à-dire qui ne sont en communication de fluide qu'avec l'un des deux collecteurs d'air 12) ou, au contraire, les collecteurs d'air 12 peuvent être en communication de fluide avec une même turbomachine ou plusieurs, communes (c'est-à-dire que chaque turbomachine est en communication de fluide avec chacun des collecteurs 12).

Avantageusement, chaque collecteur d'air 12 est dépourvu de toute autre ouverture que les orifices 14 et la ou les bouches 13 susmentionnés. Notamment, le collecteur 12 est de préférence dépourvu d'ouverture orientée en direction de l'échangeur de chaleur 1, qui permettrait dans le cas présent d'éjecter une partie du flux d'air parcourant le collecteur d'air 12, directement en direction de l'échangeur de chaleur 1, sans parcourir au moins une portion d'un tube de ventilation 8. Ainsi, tout le flux d'air créé par la ou les turbomachines parcourant le ou les collecteurs d'air 12, est réparti entre sensiblement tous les tubes de ventilation 8. Ceci permet également une répartition plus homogène de ce flux d'air.

Il est à noter ici qu'un avantage du module de refroidissement 10 de la figure 1 est de pouvoir déporter la ou les turbomachines à distance des tubes de ventilation 8, par l'intermédiaire notamment des collecteurs d'admission 12 et, éventuellement, d'un circuit aéraulique approprié mettant en communication de fluide la ou les bouches 13 du ou des collecteurs d'air 12 à une ou plusieurs turbomachines.

Par ailleurs, le ou les collecteurs d'air 12 et les tubes de ventilation 8 sont ici configurés de sorte qu'un flux d'air traversant le ou les collecteurs d'air 12 soit réparti entre les différents tubes de ventilation 8, parcoure les différents tubes de ventilation 8 et soit éjecté à travers les ouvertures 16. Ainsi, les ouvertures 16 étant disposées en regard de l'échangeur de chaleur 1, un flux d'air F2 est éjecté par les ouvertures 16, et traverse l'échangeur de chaleur 1.

Il est à noter toutefois que le flux d'air F1 traversant l'échangeur de chaleur 1 peut être sensiblement différent du flux d'air F2 éjecté par les ouvertures. Notamment, le flux d'air F1 peut comporter, en plus du flux d'air F2, un flux d'air ambiant créé par le mouvement du véhicule automobile en marche.

De préférence, hormis à leurs extrémités formant entrée d'admission d'air, qui ont une section transversale sensiblement circulaire, les tubes de ventilation 8 ont une section transversale sensiblement oblongue constante, interrompue par les ouvertures 16, telle qu'illustrée à la figure 2.

Le choix de cette forme permet une fabrication aisée des tubes de ventilation 8 et confère une bonne tenue mécanique aux tubes de ventilation 8. Notamment, de tels tubes de ventilation 8 peuvent être obtenus par pliage d'une feuille d'aluminium par exemple, mais aussi par moulage, surmoulage, ou encore par impression en trois dimensions métallique ou plastique.

Plus précisément, dans l'exemple des figures 1 et 2, la section transversale des tubes de ventilation 8 a une forme sensiblement elliptique dont le petit axe correspond à la hauteur des tubes de ventilation 8 et le grand axe à la largeur des tubes de ventilation 8 (les termes hauteur et largeur devant s'entendre par rapport à l'orientation de la figure 2). Par exemple, le petit axe h de l'ellipse est d'environ 11 mm.

Pour augmenter le flux d'air F2 éjecté vers l'échangeur de chaleur 1 à travers les ouvertures 16, les ouvertures 16 sont constituées par des fentes pratiquées dans la paroi 17 du tube de ventilation 8, ces fentes 16 s'étendant selon la direction d'allongement du tube de ventilation 8. Cette forme en fente permet de constituer un passage d'air de grandes dimensions, tout en maintenant une tenue mécanique satisfaisante des tubes de ventilation 8. Ainsi, pour obtenir un passage d'air le plus grand possible, les ouvertures 16 s'étendent sur une grande partie de la longueur du tube de ventilation 8, de préférence sur une longueur totale correspondant à au moins 90% de la longueur du tube de ventilation 8.

Les ouvertures 16 sont délimitées par des lèvres de guidage 18 faisant saillie à partir de la paroi 17 du tube de ventilation 8.

Du fait qu'elles font saillie à partir de la paroi 17 de chaque tube de ventilation 8, les lèvres de guidage 18 permettent de guider l'air éjecté par l'ouverture 16 depuis l'intérieur du tube de ventilation 8 en direction de l'échangeur de chaleur 1.

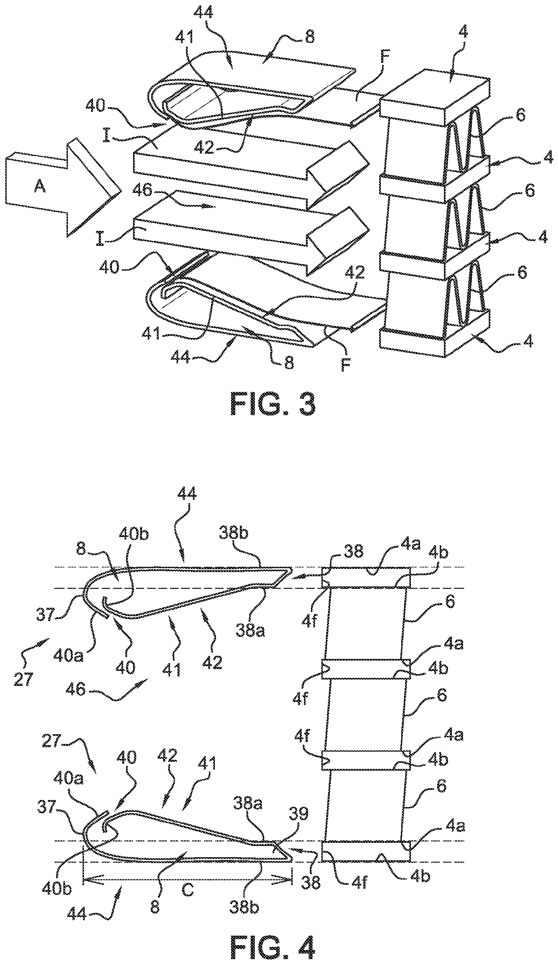

Les lèvres de guidage 18 sont de préférence planes et sensiblement parallèles. Par exemple, elles sont espacées l'une de l'autre d'une distance d'environ 5 mm et ont une largeur (le terme largeur devant être considéré au vu de l'orientation de la figure 4), comprise entre 2 et 5 mm. Les lèvres de guidage 18 s'étendent avantageusement sur toute la longueur de chaque ouverture 16.

Les lèvres de guidage 18 sont de préférence venues de matière avec le tube de ventilation 8. Les lèvres de guidage 18 sont par exemple obtenues par pliage de la paroi 17 du tube de ventilation 8.

Par ailleurs, les ouvertures 16 sont également délimitées, dans le sens de la longueur des tubes de ventilation 8, par des éléments de renfort 20 des tubes de ventilation 8. Les éléments de renfort 20 permettent de maintenir constante la largeur des ouvertures 16. Ici, ceci est réalisé du fait que les éléments de renforts s'étendent entre les deux lèvres de guidage 18 s'étendant de part et d'autre de chaque ouverture 16. Les éléments de renforts 20 s'étendent de préférence dans un plan sensiblement normal à la direction d'allongement des tubes de ventilation 8, ceci afin de maintenir la plus grande possible, la section des ouvertures 16 permettant le passage du flux d'air F2. Les éléments de renforts 20 sont avantageusement répartis régulièrement sur la longueur des tubes de ventilation 8. Dans l'exemple illustré à la figure 3, chaque tube de ventilation 8 comporte sept éléments de renfort 20. Bien entendu, ce nombre n'est nullement limitatif.

Alternativement, la section transversale des tubes de ventilation 8 est sensiblement circulaire, interrompue par les ouvertures 16. Par exemple, le diamètre du cercle interrompu par les ouvertures 16 est d'environ 11 mm.

Dans ce qui suit, les tubes de ventilation 8 sont appelés tubes aérodynamiques 8. On peut noter ici que la forme des tubes de ventilation 8 est *a priori* indépendante de la configuration des collecteurs d'admission d'air.

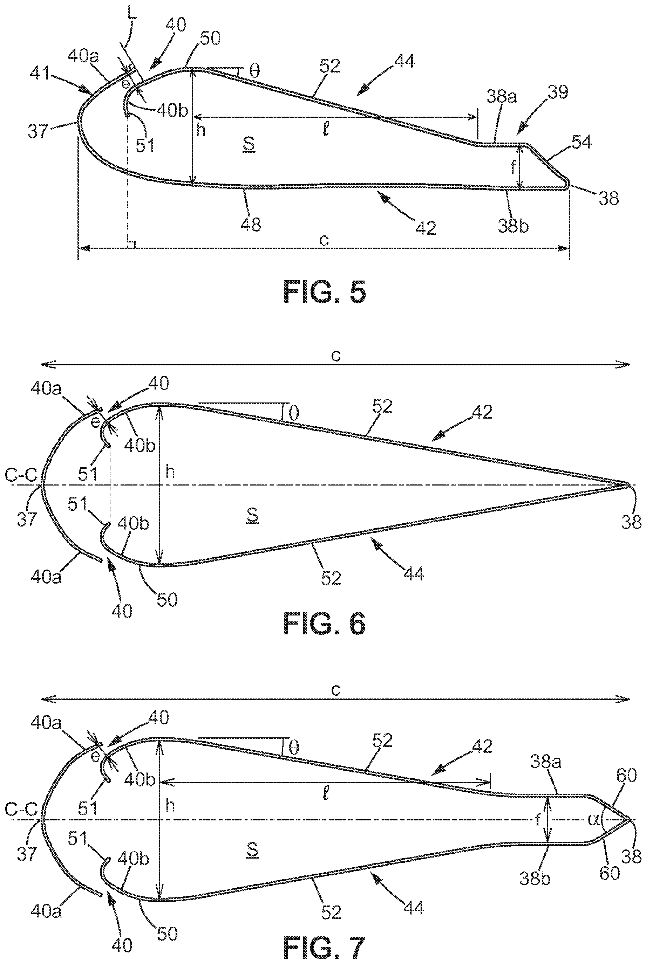

Un tube aérodynamique 8 présente sur au moins une portion, de préférence sur sensiblement toute sa longueur, une section transversale telle qu'illustrée à la figure 5 avec un bord d'attaque 37, un bord de fuite 38 opposé au bord d'attaque 37 et, ici, disposé en regard des tubes caloporteurs 4, et un premier et un deuxième profils 42, 44, s'étendant chacun entre le bord d'attaque 37 et le bord de fuite 38. Le bord d'attaque 37 est par exemple défini comme le point à l'avant de la section du tube aérodynamique 8 où le rayon de courbure de la section est minimal. L'avant de la section du tube aérodynamique 8 peut quant à lui être défini comme la portion de la section du tube aérodynamique 8 qui est opposée - c'est-à-dire qui n'est pas en vis-à-vis - de l'échangeur de chaleur 1. De même, le bord de fuite 38 peut être défini comme le point à l'arrière de la section du tube aérodynamique 8 où le rayon de courbure de la section est minimal. L'arrière de la section du tube aérodynamique 8 peut être défini par exemple comme la portion de la section du tube aérodynamique 8 qui est en vis-à-vis de l'échangeur de chaleur 1.

La distance c entre le bord d'attaque 37 et le bord de fuite 38 est par exemple comprise entre 16 mm et 26 mm. Cette distance est ici mesurée selon une direction perpendiculaire à la direction d'alignement de la rangée de tubes de aérodynamiques 8 et à la direction longitudinale des tubes aérodynamiques 8

Sur l'exemple de la figure 5, le bord d'attaque 37 est libre. Sur cette figure également, le bord d'attaque 37 est défini sur une portion parabolique de la section du tube aérodynamique 8.

Le tube aérodynamique 8 illustré aux figures 3 à 5 comporte encore au moins une ouverture 40 pour éjecter un flux d'air traversant le tube aérodynamique 8, à l'extérieur du tube aérodynamique 8 et du collecteur d'admission d'air 12, notamment sensiblement en direction de l'échangeur de chaleur 1. L'ouverture ou chaque ouverture 40 est par exemple une fente dans une paroi externe 41 du tube aérodynamique 8, la ou les fentes s'étendant par exemple selon la direction d'allongement du tube aérodynamique 8 dans lequel elles sont réalisées. La longueur totale de l'ouverture 40 ou des ouvertures peut être supérieure à 90 % de la longueur du tube aérodynamique. Chaque ouverture 40 est distincte des extrémités du tube aérodynamique 8, par lesquelles le tube aérodynamique 8 débouche dans un collecteur d'air 12. Chaque ouverture 40 est par ailleurs à l'extérieur du collecteur d'admission d'air 12. La forme en fente permet de constituer un passage d'air de grandes dimensions en direction de l'échangeur de chaleur 1 sans trop réduire la résistance mécanique des tubes aérodynamiques 8.

Dans la suite on décrit uniquement une ouverture 40 étant entendu que chaque ouverture 40 du tube aérodynamique 8 peut être identique à l'ouverture 40 décrite.

L'ouverture 40 est par exemple disposée à proximité du bord d'attaque 37. Dans l'exemple de la figure 5, l'ouverture 40 est sur le premier profil 42. Dans cet exemple, le deuxième profil 44 est dépourvu d'ouverture 40. L'ouverture 40 dans le premier profil 42 est configurée de sorte que le flux d'air éjecté par l'ouverture 40, s'écoule le long d'au moins une partie du premier profil 42.

Les tubes aérodynamiques 8 du dispositif de ventilation 2 peuvent être orientés alternativement avec le premier profil 42 ou le deuxième profil 44 orienté vers le haut. Ainsi, alternativement, deux tubes aérodynamiques 8 voisins sont tels que leurs premiers profils 42 sont en vis-à-vis ou, au contraire, leurs deuxièmes profils 44 sont en vis-à-vis. La distance entre deux tubes aérodynamiques 8 voisins dont les deuxièmes profils 44 sont en vis-à-vis est inférieure à la distance entre deux tubes aérodynamiques 8 voisins dont les premiers profils 42 sont en vis-à-vis. Le pas entre deux tubes aérodynamiques voisins ou la distance entre le centre de la section géométrique d'un premier tube aérodynamique 8 et le centre de la section géométrique d'un second tube aérodynamique 8, tels que le premier profil 42 du premier tube aérodynamique 8 soit en vis-à-vis du premier profil 42 du deuxième tube aérodynamique 8, mesurée selon la direction d'alignement des tubes aérodynamiques 8 est supérieure ou égale à 15 mm, de préférence supérieure ou égale à 20 mm, et/ou inférieure ou égale à 30 mm, de préférence inférieure ou égale à 25 mm.

Pour chaque paire de tubes aérodynamiques 8 dont les ouvertures 40 sont en vis-à-vis, les flux d'air éjectés par ces ouvertures 40 créent ainsi un passage d'air dans lequel une partie, dite air induit, de l'air ambiant est entraîné par aspiration.

Il est à noter ici que le flux d'air éjecté par les ouvertures 40 longe une partie au moins du premier profil 42 du tube aérodynamique 8, par exemple par effet Coanda. Tirant parti de ce phénomène, il est possible, grâce à l'entraînement de l'air ambiant dans le passage d'air créé, d'obtenir un débit d'air envoyé vers les tubes caloporteurs identique à celui généré par un ventilateur à hélice tout en consommant moins d'énergie.

En effet, le flux d'air envoyé vers la rangée de tubes caloporteurs 4 est la somme du flux d'air éjecté par les fentes et de l'air induit. Ainsi, il est possible de mettre en œuvre une turbomachine de puissance réduite par rapport à un ventilateur à hélice classique, mis en œuvre généralement dans le cadre d'un tel module d'échange de chaleur.

Un premier profil 42 présentant une surface Coanda permet par ailleurs de ne pas avoir à orienter les ouvertures 40 directement en direction des tubes caloporteurs 4, et ainsi de limiter l'encombrement des tubes aérodynamiques 8. Il est ainsi possible de maintenir une section de passage plus importante entre les tubes aérodynamiques 8, ce qui favorise la formation d'un plus grand débit d'air induit.

L'ouverture 40 est, sur la figure 5, délimitée par des lèvres 40a, 40b. L'écartement e entre les lèvres 40a, 40b, qui définit la hauteur de l'ouverture 40, peut être supérieur ou égal à 0,3 mm, de préférence supérieur ou égal à 0,5 mm, de préférence encore supérieure ou égale à 0,7 mm et/ou inférieur à 2 mm, de préférence inférieur ou égal à 1,5 mm, de préférence encore inférieure à 0,9 mm, de manière plus préférée encore inférieure ou égale à 0,7 mm. La hauteur de la fente est la dimension de cette fente dans la direction perpendiculaire à sa longueur. Plus la hauteur de la fente 40 est faible, plus la vitesse du flux d'air éjecté par cette fente est grande. Une grande vitesse du flux d'air éjecté se traduit par une pression dynamique élevée. Cette pression dynamique est ensuite convertie en pression statique dans la zone de mélange du flux d'air éjecté par la fente 40 et du flux d'air induit. Cette pression statique permet de vaincre les pertes de charge dues à la présence de l'échangeur de chaleur en aval du dispositif de ventilation, afin d'assurer un flux d'air adapté à travers l'échangeur de chaleur. Ces pertes de charge dues à l'échangeur de chaleur varient notamment en fonction du pas des tubes caloporteurs et du pas des ailettes de l'échangeur de chaleur, ainsi qu'en fonction du nombre de module d'échange de chaleur qui peuvent être superposés dans l'échangeur de chaleur. Cependant, une hauteur de fente trop faible induit des pertes de charges élevées dans le dispositif de ventilation, ce qui implique d'utiliser un dispositif de propulsion d'air ou plusieurs surdimensionné(s). Ceci peut engendrer un surcoût et/ou créer un encombrement incompatible avec la place disponible au voisinage du module d'échange de chaleur dans le véhicule automobile.

La lèvre extérieure 40a est ici constituée de la prolongation de la paroi du tube aérodynamique 8 définissant le bord d'attaque 37. La lèvre intérieure 40b est constituée par une partie courbe 50 du premier profil 42. Une extrémité 51 de la lèvre interne 40b peut se prolonger, comme illustré à la figure 5, en direction du deuxième profil 44, au-delà d'un plan L normal à l'extrémité libre de la lèvre externe 40a. En d'autres termes, l'extrémité 51 de la lèvre interne 40b peut se prolonger, en direction du bord d'attaque 37, au-delà du plan L normal à l'extrémité libre de la lèvre extérieure 40a. L'extrémité 51 peut alors contribuer à diriger le flux d'air circulant dans le tube aérodynamique 8 vers l'ouverture 40.

L'ouverture 40 du tube aérodynamique 8 peut être configurée de sorte qu'un flux d'air circulant dans ce tube aérodynamique 8 soit éjecté par cette ouverture 40, en s'écoulant le long du premier profil 42 sensiblement jusqu'au bord de fuite 38 du tube aérodynamique 8. L'écoulement du flux d'air le long du premier profil 42 peut résulter de l'effet Coanda. On rappelle que l'effet Coanda est un phénomène aérodynamique se traduisant par le fait qu'un fluide s'écoulant le long d'une surface à faible distance de celle-ci a tendance à l'affleurer, voire à s'y accrocher.

Pour ce faire, ici, la distance maximale h entre le premier 42 et le deuxième 44 profils, mesurée selon une direction d'alignement des tubes aérodynamiques 8, est en aval de l'ouverture 40. La distance maximale h peut être supérieure à 10 mm, de préférence supérieure à 11 mm et/ou inférieure à 20 mm, de préférence inférieure à 15 mm. Ici, à titre d'exemple, la distance maximale h est sensiblement égale à 11,5 mm. Une hauteur h trop faible peut engendrer d'importantes pertes de charge dans le tube aérodynamique 8 ce qui pourrait obliger à mettre en œuvre une turbomachine plus puissante et donc plus volumineuse. Pour une même valeur de la distance entre les tubes aérodynamiques 8, mesurée selon la direction d'alignement des tubes aérodynamiques, une hauteur h trop grande limite la section de passage entre les tubes aérodynamiques pour le flux d'air induit. Le flux d'air total dirigé vers l'échangeur de chaleur est alors également réduit.

Le premier profil 42 comporte ici une partie bombée 50 dont le sommet définit le point du premier profil 42 correspondant à la distance maximale h. La partie bombée 50 peut être disposée en aval de l'ouverture 40 dans le sens d'éjection du flux d'air. Notamment, la partie bombée 50 peut être contiguë à la lèvre interne 40b délimitant l'ouverture 40.

En aval de la partie bombée 50 dans le sens d'éjection dudit flux d'air par l'ouverture 40, le premier profil 42 du tube aérodynamique 8 de l'exemple de la figure 5 comporte une première partie 52 sensiblement rectiligne. Le deuxième profil 44 comporte, dans l'exemple illustré à la figure 5, une partie sensiblement rectiligne 48, s'étendant de préférence sur une majorité de la longueur du deuxième profil 44. Dans l'exemple de la figure 5, la longueur *l* de la première partie rectiligne 52, mesurée selon une direction perpendiculaire à la direction longitudinale du tube aérodynamique 8 et à la direction d'alignement de la rangée de tubes aérodynamiques, peut être supérieure ou égale à 30 mm, de préférence supérieure ou égale à 40 mm, et/ou inférieur ou égale à 50 mm. Une longueur relativement grande de cette première partie rectiligne est souhaitée notamment pour assurer le guidage du flux d'air éjecté de l'ouverture 40, ce qui permet d'assurer une plus grande aspiration d'air. La longueur de cette première partie rectiligne est cependant limitée du fait de l'encombrement correspondant du dispositif de ventilation et de ses conséquences sur le packaging du dispositif de ventilation ou du module d'échange de chaleur.

Dans ce cas, la première partie rectiligne 52 du premier profil 42 et la partie rectiligne 48 du deuxième profil 44 peuvent former un angle θ non plat. L'angle θ ainsi formé peut notamment être supérieur ou égale 5°, et/ou inférieur ou égal 20°, de préférence encore sensiblement égal à 10°. Cet angle de la première partie rectiligne 52 par rapport à la partie rectiligne 48 du deuxième profil 44 permet d'accentuer la détente du flux d'air éjecté par l'ouverture 40 et subissant l'effet Coanda le forçant à suivre le premier profil 42, cette détente accentuée permettant d'accroitre le flux d'air induit. Un angle θ trop grand risque cependant d'empêcher la réalisation de l'effet Coanda, de sorte que le flux d'air éjecté par l'ouverture 40 risque de ne pas suivre le premier profil 42 et, dès lors, de ne pas être orienté correctement en direction de l'échangeur de chaleur 2.

Le premier profil 42 peut comporter, comme illustré à la figure 5, une deuxième partie rectiligne 38a, en aval de la première partie rectiligne 52, dans le sens d'éjection du flux d'air, la deuxième partie rectiligne 38a s'étendant sensiblement parallèlement à la partie rectiligne 48 du deuxième profil 44. Le premier profil 42 peut également comporter une troisième partie rectiligne 54, en aval de la deuxième partie rectiligne 38a du premier profil 42. La troisième partie rectiligne 54 peut former un angle non plat avec la partie rectiligne 48 du deuxième profil 44. La troisième partie rectiligne 54 peut s'étendre, comme illustré, sensiblement jusqu'à un bord arrondi reliant la troisième partie rectiligne 54 du premier profil 42 et le partie rectiligne 48 du deuxième profil 44. Le bord arrondi peut définir le bord de fuite 38 de la section transversale du tube aérodynamique 8.

La partie rectiligne 48 du deuxième profil 44 s'étend dans l'exemple de la figure 5 sur la majorité de la longueur c de la section transversale. Cette longueur c est mesurée selon une direction perpendiculaire à la direction longitudinale des tubes aérodynamiques 8 et à la direction d'alignement de la rangée des tubes aérodynamiques 8. Cette direction correspond, dans l'exemple de la figure 5, sensiblement à la direction de l'écoulement du flux d'air induit. Dans ce premier exemple de réalisation, la longueur c de la section transversale (ou largeur du tube aérodynamique 8) peut être supérieure ou égale à 50 mm et/ou inférieure ou égale à 70 mm, de préférence sensiblement égale à 60 mm. En effet, les inventeurs ont constaté qu'une longueur relativement grande de la section transversale du tube aérodynamique permet de guider de manière plus efficace le flux d'air éjecté par l'ouverture 40 et le flux d'air induit, qui se mélange à ce flux d'air éjecté. Cependant, une longueur trop importante de la section transversale du tube aérodynamique 8 pose de problème de packaging du dispositif de ventilation 2. En particulier, l'encombrement du module d'échange de chaleur peut alors être trop important par rapport à la place qui est disponible dans le véhicule automobile dans lequel il est destiné à être monté. Le packaging du module d'échange de chaleur ou du dispositif de ventilation peut également être problématique dans ce cas.

Par ailleurs, comme illustré à la figure 5, la deuxième partie rectiligne 38a du premier profil 42 et la portion 38b de la partie rectiligne 48 du deuxième profil 44 qui lui fait face, sont parallèles. Par exemple, la distance f entre cette deuxième partie rectiligne 38a et la portion 38b de la partie rectiligne 48 du deuxième profil 44 peut être supérieure ou égale à 2 mm et/ou inférieure ou égale à 10 mm, de préférence inférieure ou égale à 5 mm.

La figure 5 illustre encore que la section transversale (ou section géométrique) du tube aérodynamique 8 délimite une section de passage S pour le flux d'air traversant le tube aérodynamique 8. Cette section de passage S est ici définie par les parois du tube aérodynamique 8 et par le segment s'étendant selon la direction d'alignement des tubes aérodynamiques 8 entre le deuxième profil 44 et le bout de l'extrémité 51 de la lèvre interne 40b. Cette section de passage peut avoir une aire supérieure ou égale à 150 mm², de préférence supérieure ou égale à 200 mm², et/ou inférieure ou égale à 700 mm², de préférence inférieure ou égale à 650 mm². Une section de passage du flux d'air dans le tube aérodynamique 8 permet de limiter les pertes de charge qui auraient pour conséquence de devoir surdimensionner la turbomachine mise en œuvre pour obtenir un débit d'air éjecté par l'ouverture 40 souhaité. Cependant, une section de passage importante induit un encombrement important du tube aérodynamique 8. Ainsi, à pas fixe des tubes aérodynamiques, une section de passage plus grande risque de nuire à la section de passage du flux d'air induit entre les tubes aérodynamiques 8, ne permettant pas, ainsi, d'obtenir un débit total d'air satisfaisant, dirigé vers les tubes caloporteurs 4.

De manière à obstruer le moins possible l'écoulement de l'air vers les tubes caloporteurs 4 et les ailettes, le dispositif de ventilation 2 muni de tels tubes aérodynamiques 8 est avantageusement disposé de façon que chaque tube aérodynamique 8 soit en vis-à-vis de la face frontale 4f reliant les première 4a et seconde 4b parois planes d'un tube caloporteur 4 correspondant. Plus particulièrement, le bord de fuite 38 de chaque tube aérodynamique 8 est compris dans le volume délimité par les première et seconde parois planes longitudinales du tube caloporteur 4 correspondant.

De préférence, la deuxième partie rectiligne 38a du premier profil et la partie rectiligne 48 du deuxième profil 44 sont contenues respectivement dans un même plan que la première paroi plane longitudinale et la seconde paroi plane longitudinale du tube caloporteur 4 correspondant.

En particulier, la distance f séparant la deuxième partie rectiligne 38a du premier profil 42 et la portion 38b de la partie rectiligne 48 du deuxième profil 44 qui lui fait face, est sensiblement égale à la distance séparant la première paroi longitudinale et la seconde paroi longitudinale du tube caloporteur 4 en vis-à-vis duquel le tube aérodynamique 8 est disposé. Par exemple, cette distance f est supérieure ou égale à 2 mm et/ou inférieure ou égale à 10 mm, de préférence inférieure ou égale à 5 mm.

Dans d'autres modes de réalisation, la distance f séparant la deuxième partie rectiligne 38a du premier profil 42 et la portion 38b de la partie rectiligne 48 du deuxième profil 44, qui lui fait face, peut toutefois être inférieure à la distance séparant la première paroi longitudinale et la seconde paroi longitudinale du tube caloporteur en vis-à-vis duquel le tube aérodynamique 8 est disposé.

Deux tubes caloporteurs 4 peuvent être contenus dans le volume délimité par le passage d'air défini par deux tubes aérodynamiques 8voisins. On peut toutefois envisager qu'un seul tube caloporteur 4, ou encore trois ou quatre tubes caloporteurs 4 soient contenus dans ce volume. À l'inverse, on peut envisager qu'un tube aérodynamique 8 soit disposé en vis-à-vis de chaque tube caloporteur 4.

Dans les exemples des figures 6, 7 et 8, les conduits aérodynamiques 8 sont sensiblement rectilignes, parallèles entre eux et alignés de manière à former une rangée de tubes aérodynamiques 8. Cependant, les premier et deuxième profils 42, 44 de chaque tube aérodynamique 8 sont, selon ces exemples, symétriques par rapport à un plan C-C, ou plan de corde, passant par le bord d'attaque 37 et le bord de fuite 38 de chaque tube aérodynamique 8.

Comme les premier et deuxième profils 42, 44 sont symétriques, chacun de ces profils 42, 44 est muni d'une ouverture 40. Ainsi, au moins une première ouverture 40 est réalisée sur le premier profil 42, qui est configurée pour qu'un flux d'air sortant de la première ouverture 42 s'écoule le long d'au moins une partie du premier profil 42. De même, au moins une deuxième ouverture 40 est présente sur le deuxième profil 44, qui est configurée pour qu'un flux d'air sortant de la deuxième ouverture 40 s'écoule le long d'au moins une partie du deuxième profil 44. Comme pour l'exemple de la figure 5, ceci peut être réalisé ici en mettant en œuvre l'effet Coanda.

Pour les mêmes raisons que celles données pour l'exemple de la figure 5, la distance c entre le bord d'attaque 37 et le bord de fuite 38 peut également, dans ces exemples, être supérieure ou égale à 50 mm et/ou inférieure ou égale à 80 mm. Notamment la longueur c peut être égale à 60 mm.

Les ouvertures 40 sont analogues à celles de l'exemple de la figure 5. Notamment, la distance e séparant les lèvres interne 40b et externe 40a de chaque ouverture 40 peut être supérieure ou égale à 0,3 mm, de préférence supérieure ou égale à 0,5 mm, de préférence encore supérieure ou égale à 0,7 mm, et/ou inférieure ou égale à 2 mm, de préférence inférieure ou égale à 1,5 mm, de préférence encore inférieure ou égale à 0,9 mm et de manière préférée encore inférieure ou égale à 0,7 mm.

Le fait que les profils 42, 44 soient symétriques par rapport au plan de corde C-C passant par le bord d'attaque 37 et le bord de fuite 38 du tube aérodynamique 8 permet de limiter l'obstruction au flux d'air entre le dispositif de ventilation 2 et les tubes caloporteurs 4, tout en créant davantage de passages d'air dans le volume disponible devant les tubes caloporteurs 4.

Autrement dit, contrairement à l'exemple de réalisation de la figure 5, un passage d'air entraînant l'air ambiant est créé entre chaque paire de tubes aérodynamiques 8 voisins, réalisés selon l'un des figure 6 à 8.

Le pas entre deux tubes aérodynamiques 8 voisins peut, dans ce cas, être supérieure ou égale à 15 mm, de préférence supérieure ou égale à 20 mm, de préférence encore supérieure ou égale à 23 mm et/ou inférieure ou égale à 30 mm, de préférence inférieure ou égale à 25 mm, de préférence encore inférieure ou égale à 27 mm. En effet, si le pas entre les tubes aérodynamiques 8 est plus faible, le débit d'air induit s'en trouve limité par une section de passage entre les tubes aérodynamiques faibles. Au contraire, si le pas est trop grand, le flux d'air éjecté ne permet pas de créer un flux d'air induit sur tout le pas entre les tubes aérodynamiques voisins.

Le pas entre deux tubes aérodynamiques 8 voisins peut notamment être défini comme la distance entre le centre de la section transversale de deux tubes aérodynamiques 8 voisins ou, plus généralement, comme la distance entre un point de référence sur un premier tube aérodynamique 8 et le point correspondant au point de référence, sur le tube aérodynamique 8 le plus proche. Le point de référence peut notamment être l'un parmi le bord d'attaque 37, le bord de fuite 38 ou le sommet de la partie bombée 50.

La distance entre les tubes aérodynamiques 8 et les tubes caloporteurs 4 peut notamment être choisie supérieure ou égale à 5 mm, de préférence supérieure ou égale à 40 mm, et/ou inférieure ou égale à 150 mm, de préférence inférieure ou égale à 100 mm. En effet, le pic de vitesse du profil de vitesse de l'air au voisinage du profil, tend à se réduire en s'écartant de l'ouverture 40 dans le tube aérodynamique. Une absence de pic traduit un mélange homogène du flux d'air éjecté par l'ouverture 40 et du flux d'air induit. Il est préférable qu'un tel mélange homogène soit réalisé avant que le flux d'air n'arrive sur les tubes caloporteurs. En effet, un flux d'air incident sur les tubes caloporteurs, hétérogène, ne permet pas un refroidissement optimal des tubes caloporteurs et induit des pertes de charges plus importantes. Cependant, la distance entre les tubes aérodynamiques et les tubes caloporteurs est de préférence contenue pour limiter l'encombrement du module de refroidissement.

Dans l'exemple illustré à la figure 6, les premier et deuxième profils 42, 44 du tube aérodynamique 8 convergent vers le bord de fuite 38 de façon que la distance séparant les premier et deuxième profils 42, 44 diminue strictement en direction du bord de fuite 38 à partir d'un point de ces premier et deuxième profils 42, 44 correspondant à la distance maximale h entre ces deux profils, ces points des premier et deuxième profils 42, 44 étant en aval des ouverture 40 dans le sens d'écoulement du flux d'air éjecté par l'ouverture 40. De préférence, les premier et deuxième profils 42, 44 forment chacun un angle compris entre 5 et 10° avec la corde C-C de symétrie de la section transversale du tube aérodynamique 8.

De ce fait, contrairement à l'exemple de la figure 5, le profil aérodynamique de la figure 6 ne comprend pas une portion délimitée par des première et deuxième parois planes opposées parallèles. Ceci présente l'avantage de limiter la traînée le long du profil aérodynamique du tube aérodynamique 8.

Par exemple, la distance maximale h entre le premier profil 42 et le deuxième profil 44 peut être supérieure ou égale à 10 mm et/ou inférieure ou égale à 30 mm. Notamment cette distance maximale h peut être égale à 11,5 mm.

Dans l'exemple illustré à la figure 7, le bord de fuite 38 est formé par le sommet joignant deux portions rectilignes 60 symétriques du premier profil 42 et du deuxième profil 44 de chaque tube aérodynamique 8. Selon la variante de la figure 7, le bord de fuite 38 est le point de la section transversale du tube aérodynamique 8 situé le plus proche de l'échangeur de chaleur. En d'autres termes, l'angle α formé par les deux portions rectilignes 60 est inférieur à 180°, notamment inférieur à 90 °.

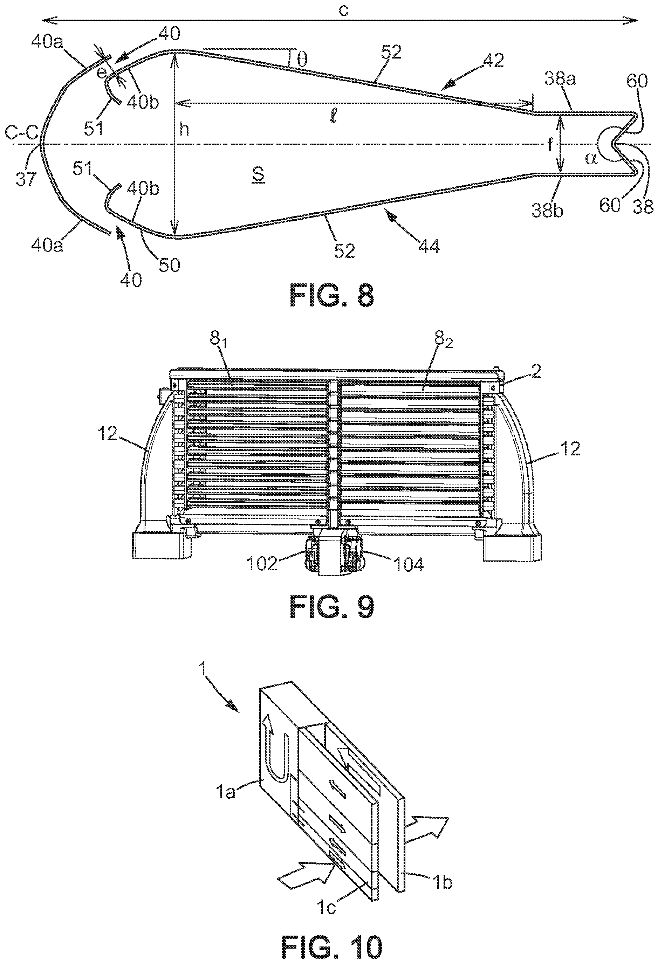

Au contraire, dans la variante de la figure 8, le bord de fuite 38 est disposé entre les deux portions rectilignes 38a, 38b des premier et deuxième profils 42, 44. En d'autres termes, l'angle α formé par les portions rectilignes 60 est ici supérieur à 90 °, notamment supérieur à 180 °.

Les figures 9 et 10 illustrent respectivement un dispositif de ventilation 2 et un échangeur de chaleur 1 d'une variante du module d'échange de chaleur 10 selon la figure 1.

Selon la figure 10, l'échangeur de chaleur 1 comporte en fait trois échangeurs de chaleurs 1a, 1b, 1c, qui peuvent être indépendants les uns des autres. Les trois échangeurs de chaleurs s'étendent dans des plans parallèles, de telle sortes que le premier échangeur de chaleur 1 s'étend à côté des deuxième et troisième échangeurs de chaleurs 1b, 1c, tandis que les deuxième et troisième échangeurs de chaleurs 1b, 1c, s'étendent l'un en vis-à-vis de l'autre, de telle sorte que le troisième échangeur de chaleur 1c est interposé entre le dispositif de ventilation 2 et le deuxième échangeur 1b.

Par ailleurs, le dispositif de ventilation 2 comporte deux pluralités de tubes de ventilation 8₁, 8₂, formant respectivement une première rangée de tubes de ventilation 8₁ et une deuxième rangée de tubes de ventilation 8₂. Ces deux rangées de tubes de ventilation 8₁, 8₂, s'étendent avantageusement côté à côté, sensiblement dans un même plan. Chacune des rangées de tubes de ventilation 8₁, 8₂ est alimentée en flux d'air indépendamment de l'autre, par un collecteur d'admission d'air 12 respectif. Il est à noter qu'ici, un dispositif de propulsion d'air créant un flux d'air est reçu directement dans chacun des collecteurs d'admission d'air 12.

Par ailleurs, chaque tube de ventilation 8₁, 8₂ des rangées de tubes de ventilation 8₁, 8₂ est monté pivotable autour d'un axe longitudinal respectif. Ainsi, il est possible de commander le pivotement des tubes de ventilation 8₁, 8₂ entre une position effective permettant voire optimisant le passage d'air entre deux tubes voisins d'une même rangée de tubes, et une position de fermeture, limitant voire empêchant le passage d'air entre deux tubes voisins d'une même rangée de tubes. Avantageusement, le pivotement de tous les tubes d'une même rangée de tubes est commandé simultanément, indépendamment du pivotement des tubes de l'autre rangée de tube. Ainsi, deux actionneurs 102, 104 sont ici mis en œuvre, chaque actionneur pilotant le pivotement d'une rangée de tubes respective. Avantageusement, les tubes de ventilation 8₁, 8₂ ont une section transversale oblongue afin d'empêcher le passage d'air entre eux quand ils sont dans la position de fermeture.

Avantageusement, les tubes 8₁, 8₂ dans leur position de fermeture ne sont pas alimentés en flux d'air. Ceci peut être réalisé en arrêtant le dispositif de propulsion d'air correspondant ou en coupant la communication de fluide entre le dispositif de propulsion d'air correspondant et les tubes dans cette position. Cette coupure de la communication de fluide peut notamment être réalisée dans le collecteur d'admission d'air 12 alimentant les tubes en position de fermeture.

Ainsi, avec le dispositif de ventilation de la figure 9 il est possible de fournir un flux d'air vers l'échangeur de chaleur la uniquement, au moyen des tubes de ventilation 8₁, les tubes de ventilation 8₂ en regard des deuxième et troisième échangeurs de chaleur 1b, 1c étant en position de fermeture. Bien entendu, l'inverse est également possible.

Il est ainsi possible de limiter les pertes aérodynamiques provoquées par l'utilisation du dispositif de ventilation 2, à celles strictement nécessaires pour refroidir un ou plusieurs échangeurs de chaleur, en fonction de leurs besoins respectifs.

L'invention n'est pas limitée aux exemples de réalisation présentés et d'autres modes de réalisation apparaîtront clairement à l'homme du métier. Notamment, les différents exemples peuvent être combinés, tant qu'ils ne sont pas contradictoires.

## Revendications

1. Dispositif de ventilation (2) destiné à générer un flux d'air à travers au moins un échangeur de chaleur (1 ; 1a, 1b, 1c) de véhicule automobile, le dispositif de ventilation (2) comprenant :
- une première pluralité de conduits (8₁),
- au moins un premier collecteur d'air (12) comportant des orifices, chaque conduit de la première pluralité de conduits (8₁) débouchant par une de ses extrémités dans un orifice distinct du au moins une premier collecteur d'air (12), chaque conduit de ladite première pluralité de conduits (8₁) ayant au moins une ouverture (16 ; 40) de passage d'un flux d'air traversant ledit conduit (8₁), l'ouverture (16 ; 40) étant distincte des extrémités du conduit (8₁) correspondant, l'ouverture (16 ; 40) étant située à l'extérieur dudit au moins un premier collecteur d'air (12),
- une deuxième pluralité de conduits (8₂), le dispositif étant **caractérisé en ce qu'**il comprend
- au moins un deuxième collecteur d'air (12) comportant des orifices, chaque conduit de la deuxième pluralité de conduits (8₂) débouchant par une de ses extrémités dans un orifice distinct du au moins une deuxième collecteur d'air (12), chaque conduit de ladite deuxième pluralité de conduits (8₂) ayant au moins une ouverture (16 ; 40) de passage d'un flux d'air traversant ledit conduit (8₂), l'ouverture (16 ; 40) étant distincte des extrémités du conduit (8₂) correspondant, l'ouverture (16 ; 40) étant située à l'extérieur dudit au moins un deuxième collecteur d'air (12),
dans lequel les conduits de la première pluralité de conduits (8₁) et/ou de la deuxième pluralité de conduits (8₂) sont pivotables autour d'un axe longitudinal respectif, indépendamment de ladite deuxième pluralité de conduits (8₂) ou de la première pluralité de conduits (8₁), respectivement.

2. Dispositif de ventilation selon la revendication 1, dans lequel les conduits de la première pluralité de conduits (8₁) et les conduits de la deuxième pluralité de conduits (8₂) forment respectivement une première et une deuxième rangées de conduits, les première et deuxième rangées de conduits s'étendant dans un même plan.

3. Dispositif de ventilation selon la revendication 1 ou 2, dans lequel les conduits de la première pluralité de conduits (8₁) et/ou les conduits de la deuxième pluralité de conduits (8₂) ont une section transversale oblongue, telle que dans une première position des conduits, un espace est ménagés entres les conduits, et dans une deuxième position des conduits, atteinte à partir de la première position par pivotement autour d'un axe longitudinal, les conduits réduisent l'espace entre les conduits, voire empêchent le passage d'air entre les conduits.

4. Dispositif de ventilation selon l'une quelconque des revendications précédentes, comprenant des moyens pour sélectivement couper la communication de fluide entre une première source de flux d'air alimentant ledit au moins un premier collecteur et au moins certains conduits de la première pluralité de conduits et/ou des moyens pour sélectivement couper la communication de fluide entre une deuxième source de flux d'air alimentant ledit au moins un deuxième collecteur et au moins certains conduits de la deuxième pluralité de conduits.

5. Dispositif de ventilation selon l'une quelconque des revendications précédentes, comprenant au moins un premier dispositif de propulsion d'air en communication de fluide avec ledit au moins un premier collecteur d'air (12) et au moins un deuxième dispositif de propulsion d'air en communication de fluide avec ledit au moins un deuxième collecteur d'air (12).

6. Dispositif de ventilation selon l'une quelconque des revendications 1 à 5, comprenant au moins un premier dispositif de propulsion d'air reçu dans ledit au moins un premier collecteur d'air (12) et au moins un deuxième dispositif de propulsion d'air reçu dans ledit au moins un deuxième collecteur d'air (12).

7. Dispositif de ventilation selon l'une quelconque des revendications précédentes, dans lequel chaque conduit de ladite première pluralité de conduits (8₁) et/ou de la deuxième pluralité de conduits (8₂) a, sur au moins un tronçon, une section géométrique comprenant :
- un bord d'attaque (37) ;
- un bord de fuite (38) opposé au bord d'attaque (37) ;
- un premier et un deuxième profils (42 ; 44), s'étendant chacun entre le bord d'attaque (37) et le bord de fuite (38),
ladite au moins une ouverture (40) du conduit étant sur le premier profil (42), ladite au moins une ouverture (40) étant configurée de sorte que le flux d'air éjecté s'écoule le long d'au moins une partie du premier profil (42).

8. Dispositif de ventilation selon l'une quelconque des revendications précédentes, dans lequel chaque conduit de ladite première pluralité de conduits (8₁) et/ou de ladite deuxième pluralité de conduits (8₂) a, sur au moins un tronçon, une section géométrique comprenant :
- un bord d'attaque (37) ;
- un bord de fuite (38) opposé au bord d'attaque (37) ;
- un premier et un deuxième profils (42 ; 44) s'étendant chacun entre le bord d'attaque (37) et le bord de fuite (38),
au moins une ouverture (40) du conduit étant configurée sur le premier profil (42) de sorte que le flux d'air éjecté s'écoule le long d'au moins une partie du premier profil (42) et au moins une ouverture (40) du conduit étant configurée sur le deuxième profil (44) de sorte que le flux d'air éjecté s'écoule le long d'au moins une partie du deuxième profil (44).

9. Module d'échange de chaleur de véhicule automobile comprenant :
- au moins un échangeur de chaleur (1 ; 1a, 1b, 1c), ledit au moins un échangeur de chaleur ayant plusieurs tubes (4), dits tubes caloporteurs (4), dans lesquels un fluide est destiné à circuler, et
- un dispositif de ventilation (2) selon l'une quelconque des revendications précédentes, adapté à générer un flux d'air vers les tubes caloporteurs (4).

10. Module d'échange de chaleur de véhicule automobile selon la revendication 9, comprenant au moins un premier échangeur de chaleur (1a) et au moins un deuxième échangeur de chaleur (1b, 1c), ledit au moins un premier échangeur de chaleur (1a) étant disposé en vis-à-vis de ladite première pluralité de conduits (8₁) et ledit au moins un deuxième échangeur de chaleur (1b, 1c) étant disposé en vis-à-vis de ladite deuxième pluralité de conduits (8₂).

## Patentansprüche

1. Belüftungsvorrichtung (2), die dazu bestimmt ist, einen Luftstrom durch mindestens einen Wärmetauscher (1; 1a, 1b, 1c) eines Kraftfahrzeugs hindurch zu erzeugen, wobei die Belüftungsvorrichtung (2) enthält:
- eine erste Vielzahl von Kanälen (8₁),
- mindestens eine Öffnungen aufweisende erste Luftsammelleitung (12), wobei jeder Kanal der ersten Vielzahl von Kanälen (8₁) über eines seiner Enden in eine unterschiedliche Öffnung der mindestens einen ersten Luftsammelleitung (12) mündet, wobei jeder Kanal der ersten Vielzahl von Kanälen (8₁) mindestens eine Durchgangsöffnung (16; 40) eines den Kanal (8₁) durchquerenden Luftstroms hat, wobei die Öffnung (16; 40) sich von den Enden des entsprechenden Kanals (8₁) unterscheidet, wobei die Öffnung (16; 40) sich außerhalb der mindestens einen ersten Luftsammelleitung (12) befindet,
- eine zweite Vielzahl von Kanälen (8₂),
wobei die Vorrichtung **dadurch gekennzeichnet ist, dass** sie enthält:
- mindestens eine Öffnungen aufweisende zweite Luftsammelleitung (12), wobei jeder Kanal der zweiten Vielzahl von Kanälen (8₂) über eines seiner Enden in eine unterschiedliche Öffnung der mindestens einen zweiten Luftsammelleitung (12) mündet, wobei jeder Kanal der zweiten Vielzahl von Kanälen (8₂) mindestens eine Durchgangsöffnung (16; 40) eines den Kanal (8₂) durchquerenden Luftstroms hat, wobei die Öffnung (16; 40) sich von den Enden des entsprechenden Kanals (8₂) unterscheidet, wobei die Öffnung (16; 40) sich außerhalb der mindestens einen zweiten Luftsammelleitung (12) befindet,
wobei die Kanäle der ersten Vielzahl von Kanälen (8₁) und/oder der zweiten Vielzahl von Kanälen (8₂) um eine jeweilige Längsachse schwenken können, unabhängig von der zweiten Vielzahl von Kanälen (8₂) bzw. der ersten Vielzahl von Kanälen (8₁).

2. Belüftungsvorrichtung nach Anspruch 1, wobei die Kanäle der ersten Vielzahl von Kanälen (8₁) und die Kanäle der zweiten Vielzahl von Kanälen (8₂) eine erste bzw. eine zweite Reihe von Kanälen bilden, wobei die erste und die zweite Reihe von Kanälen sich in der gleichen Ebene erstrecken.

3. Belüftungsvorrichtung nach Anspruch 1 oder 2, wobei die Kanäle der ersten Vielzahl von Kanälen (8₁) und/oder die Kanäle der zweiten Vielzahl von Kanälen (8₂) einen länglichen Querschnitt haben, derart, dass in einer ersten Stellung der Kanäle ein Raum zwischen den Kanälen freigelassen wird, und in einer zweiten Stellung der Kanäle, die ausgehend von der ersten Stellung durch Schwenken um eine Längsachse erreicht wird, die Kanäle den Raum zwischen den Kanälen reduzieren, sogar den Luftdurchlass zwischen den Kanälen verhindern.

4. Belüftungsvorrichtung nach einem der vorhergehenden Ansprüche, die Einrichtungen, um die Fluidverbindung zwischen einer ersten Luftstromquelle, die die mindestens eine erste Sammelleitung versorgt, und mindestens bestimmten Kanälen der ersten Vielzahl von Kanälen selektiv zu unterbrechen, und/oder Einrichtungen enthält, um die Fluidverbindung zwischen einer zweiten Luftstromquelle, die die mindestens eine zweite Sammelleitung versorgt, und mindestens bestimmten Kanälen der zweiten Vielzahl von Kanälen selektiv zu unterbrechen.

5. Belüftungsvorrichtung nach einem der vorhergehenden Ansprüche, die mindestens eine erste Luftantriebsvorrichtung in Fluidverbindung mit der mindestens einen ersten Luftsammelleitung (12) und mindestens eine zweite Luftantriebsvorrichtung in Fluidverbindung mit der mindestens einen zweiten Luftsammelleitung (12) enthält.

6. Belüftungsvorrichtung nach einem der Ansprüche 1 bis 5, die mindestens eine erste Luftantriebsvorrichtung, die in der mindestens einen ersten Luftsammelleitung (12) aufgenommen wird, und mindestens eine zweite Luftantriebsvorrichtung enthält, die in der mindestens einen zweiten Luftsammelleitung (12) aufgenommen wird.

7. Belüftungsvorrichtung nach einem der vorhergehenden Ansprüche, wobei jeder Kanal der ersten Vielzahl von Kanälen (8₁) und/oder der zweiten Vielzahl von Kanälen (8₂) über mindestens einen Abschnitt einen geometrischen Querschnitt hat, der enthält:
- eine Vorderkante (37);
- eine Hinterkante (38) gegenüber der Vorderkante (37);
- ein erstes und ein zweites Profil (42; 44), die sich je zwischen der Vorderkante (37) und der Hinterkante (38) erstrecken,
wobei die mindestens eine Öffnung (40) des Kanals sich auf dem ersten Profil (42) befindet, wobei die mindestens eine Öffnung (40) so konfiguriert ist, dass der ausgestoßene Luftstrom entlang mindestens eines Teils des ersten Profils (42) strömt.

8. Belüftungsvorrichtung nach einem der vorhergehenden Ansprüche, wobei jeder Kanal der ersten Vielzahl von Kanälen (8₁) und/oder der zweiten Vielzahl von Kanälen (8₂) über mindestens einen Abschnitt einen geometrischen Querschnitt hat, der enthält:
- eine Vorderkante (37);
- eine Hinterkante (38) gegenüber der Vorderkante (37);
- ein erstes und ein zweites Profil (42; 44), die sich je zwischen der Vorderkante (37) und der Hinterkante (38) erstrecken,
wobei mindestens eine Öffnung (40) des Kanals auf dem ersten Profil (42) so konfiguriert ist, dass der ausgestoßene Luftstrom entlang mindestens eines Teils des ersten Profils (42) strömt, und mindestens eine Öffnung (40) des Kanals auf dem zweiten Profil (44) so konfiguriert ist, dass der ausgestoßene Luftstrom entlang mindestens eines Teils des zweiten Profils (44) strömt.

9. Wärmetauschermodul eines Kraftfahrzeugs, das enthält:
- mindestens einen Wärmetauscher (1; 1a, 1b, 1c), wobei der mindestens eine Wärmetauscher mehrere Rohre (4) hat, Wärmeträgerrohre (4) genannt, in denen ein Fluid zirkulieren soll, und
- eine Belüftungsvorrichtung (2) nach einem der vorhergehenden Ansprüche, die geeignet ist, einen Luftstrom zu den Wärmeträgerrohren (4) zu erzeugen.

10. Wärmetauschermodul eines Kraftfahrzeugs nach Anspruch 9, das mindestens einen ersten Wärmetauscher (1a) und mindestens einen zweiten Wärmetauscher (1b, 1c) enthält, wobei der mindestens eine erste Wärmetauscher (1a) gegenüber der ersten Vielzahl von Kanälen (8₁) angeordnet ist, und der mindestens eine zweite Wärmetauscher (1b, 1c) gegenüber der zweiten Vielzahl von Kanälen (8₂) angeordnet ist.

## Claims

1. Ventilation device (2) intended for generating a flow of air through at least one motor vehicle heat exchanger (1; 1a, 1b, 1c), the ventilation device (2) comprising:
- a first plurality of ducts (8₁),
- at least one first air manifold (12) having orifices, each duct of the first plurality of ducts (8₁) opening at one of its ends in a separate orifice of the at least one first air manifold (12), each duct of said first plurality of ducts (8₁) having at least one passage opening (16; 40) for a flow of air passing through said duct (8₁), the opening (16; 40) being separate from the ends of the corresponding duct (8₁), the opening (16; 40) being located outside said at least one first air manifold (12),
- a second plurality of ducts (8₂), the device being **characterized in that** it comprises
- at least one second air manifold (12) having orifices, each duct of the second plurality of ducts (8₂) opening at one of its ends in a separate orifice of the at least one second air manifold (12), each duct of said second plurality of ducts (8₂) having at least one passage opening (16; 40) for a flow of air passing through said duct (8₂), the opening (16; 40) being separate from the ends of the corresponding duct (8₂), the opening (16; 40) being located outside said at least one second air manifold (12),
wherein the ducts of the first plurality of ducts (8₁) and/or of the second plurality of ducts (8₂) are pivotable about a respective longitudinal axis, independently of said second plurality of ducts (8₂) or of the first plurality of ducts (8₁), respectively.

2. Ventilation device according to Claim 1, wherein the ducts of the first plurality of ducts (8₁) and the ducts of the second plurality of ducts (8₂) respectively form a first and a second row of ducts, the first and second rows of ducts extending in the same plane.

3. Ventilation device according to Claim 1 or 2, wherein the ducts of the first plurality of ducts (8₁) and/or the ducts of the second plurality of ducts (8₂) have an oblong cross section, such that in a first position of the ducts, a space is formed between the ducts, and in a second position of the ducts, which is reached from the first position by pivoting about a longitudinal axis, the ducts reduce the space between the ducts, even prevent the passage of air between the ducts.

4. Ventilation device according to any one of the preceding claims, comprising means for selectively cutting off the fluid communication between a first air flow source supplying said at least one first manifold and at least some ducts of the first plurality of ducts and/or means for selectively cutting off the fluid communication between a second air flow source supplying said at least one second manifold and at least some ducts of the second plurality of ducts.

5. Ventilation device according to any one of the preceding claims, comprising at least one first air propulsion device in fluid communication with said at least one first air manifold (12) and at least one second air propulsion device in fluid communication with said at least one second air manifold (12).

6. Ventilation device according to any one of Claims 1 to 5, comprising at least one first air propulsion device received in said at least one first air manifold (12) and at least one second air propulsion device received in said at least one second air manifold (12).

7. Ventilation device according to any one of the preceding claims, wherein each duct of said first plurality of ducts (8₁) and/or of the second plurality of ducts (8₂), over at least one portion, has a geometric cross section comprising:
- a leading edge (37);
- a trailing edge (38) opposite to the leading edge (37);
- a first and a second profile (42; 44), each extending between the leading edge (37) and the trailing edge (38),
said at least one opening (40) of the duct being on the first profile (42), said at least one opening (40) being configured in such a way that the ejected flow of air flows along at least part of the first profile (42).

8. Ventilation device according to any one of the preceding claims, wherein each duct of said first plurality of ducts (8₁) and/or of said second plurality of ducts (8₂), over at least one portion, has a geometric cross section comprising:
- a leading edge (37);
- a trailing edge (38) opposite to the leading edge (37);
- a first and a second profile (42; 44), each extending between the leading edge (37) and the trailing edge (38),
at least one opening (40) of the duct being configured on the first profile (42) in such a way that the ejected flow of air flows along at least part of the first profile (42) and at least one opening (40) of the duct being configured on the second profile (44) in such a way that the ejected flow of air flows along at least part of the second profile (44).

9. Motor vehicle heat-exchange module, comprising:
- at least one heat exchanger (1; 1a, 1b, 1c), said at least one heat exchanger having multiple tubes (4), referred to as heat-transfer tubes (4), in which a fluid is intended to circulate, and
- a ventilation device (2) according to any one of the preceding claims, suitable for generating a flow of air towards the heat-transfer tubes (4).

10. Motor vehicle heat-exchange module according to Claim 9, comprising at least one first heat exchanger (1a) and at least one second heat exchanger (1b, 1c), said at least one first heat exchanger (1a) being disposed facing said first plurality of ducts (8₁) and said at least one second heat exchanger (1b, 1c) being disposed facing said second plurality of ducts (8₂).
